Europäisches Patentamt

(19) European Patent Office

Office européen des brevets

(11) Publication number: **0 096 072**
**B1**

(12) EUROPEAN PATENT SPECIFICATION

(45) Date of publication of patent specification: **20.01.88**

(51) Int. Cl.⁴: **F 16 H 25/22, B 23 Q 5/56**

(21) Application number: **83900378.7**

(22) Date of filing: **13.12.82**

(86) International application number:
**PCT/US82/01743**

(87) International publication number:
**WO 83/02142 23.06.83 Gazette 83/15**

(54) BALL NUT HAVING ADJUSTABLE PRELOADING.

(30) Priority: **18.12.81 US 331980**

(43) Date of publication of application:
**21.12.83 Bulletin 83/51**

(45) Publication of the grant of the patent:
**20.01.88 Bulletin 88/03**

(84) Designated Contracting States:
**BE CH DE FR GB LI**

(56) References cited:
**CH-A- 386 809**
**DE-A-1 935 703**
**DE-A-2 623 014**
**FR-A-2 014 053**
**FR-A-2 082 450**
**FR-A-2 304 001**
**GB-A-1 005 962**
**SU-A- 748 072**
**SU-A- 752 077**
**US-A-3 053 106**
**US-A-3 638 507**

(73) Proprietor: **KEARNEY & TRECKER**
**CORPORATION**
**11000 Theodore Trecker Way**
**Milwaukee, Wisconsin 53214 (US)**

(72) Inventor: **JOHNSTONE, Richard**
**20300 West Gebhardt Road**
**Brookfield, WI 53005 (US)**

(74) Representative: **Baillie, Iain Cameron et al**
**c/o Ladas & Parry Isartorplatz 5**
**D-8000 München 2 (DE)**

Courier Press, Leamington Spa, England.

## Description

This invention relates generally to ball nuts such as are employed in combination with a ball screw or the like to precisely position a moving member such as a machine tool axis slide along a fixed member such as a machine tool base, and more specifically, this invention relates to a ball nut having adjustable preloading.

In the fabrication of various machines, specifically numerically controlled machine tools, it is often desirable to provide for rapid and accurate positioning of a movable member, such as an axis slide in the case of a machine tool, on a fixed member, such as a machine tool bed. The most common means employed for providing rapid and accurate positioning of a movable member on a fixed member are the well known ball screw and ball nut. Typically, the ball screw is journaled into the fixed member parallel to the desired path of movable member movement and the ball nut is affixed to the movable member so as to be in threaded engagement with the ball screw. In operation, the ball screw is rotatably driven by a servo controlled motor in response to numerical control commands to displace the ball nut therealong, thereby precisely positioning the movable member along the fixed member.

Heretofore, when the combination of a ball screw and ball nut have been employed in a machine tool or the like to precisely position a movable member along a fixed member, the ball nut has been affixed to the movable member so that the loading on the ball nut remains fixed during the useful life of the ball nut. Generally, fixing the preload on the ball nut during machine tool fabrication incurs no difficulty during subsequent machine tool use since present day ball screw velocities are low so that fixing ball screw preload to make the ball nut relatively stiff does not place any undue strain on the ball screw. In fact, fixing the ball nut preload to make the ball nut very stiff axially is usually desirable at low ball screw velocities because of the relatively large forces on the ball screw.

The advent of very high speed spindles capable of performing cutting operations at 20,000 rpm and above and the advent of very durable tooling has made present day machine tool feedrates, that is, machine tool axis slide velocities of up to 10 meters/minute (400 inches per minute) too slow to obtain maximum machine tool efficiency during certain machining operations on certain types of material. To obtain maximum machine tool efficiency under such conditions may require feedrates of 100 meters/minute or higher. At such high feedrates and by implication, such high ball screw speeds, it is imperative that ball screw drag be reduced, which is best accomplished by decreasing ball nut preloading as the forces on the ball screw at such high speeds are generally low in comparison to the forces on the screw at low screw speeds. Thus, it is desirable to adaptively vary the preloading on the ball nut in relation to ball screw speed.

FR—A—2304001 discloses a ball nut having an expansion unit between first and second ball nut elements to urge the ball nut elements in opposite directions for preloading the ball nut. In this patent manual adjusting means are provided in the form of screws which are threaded into a conduit for increasing the pressure in and annular cylinder to apply additional preloading pressure between the two nut elements.

Document SU—A—748,072 on which the precharacterizing part of claim 1 is based, discloses a ball nut in which a pair of nut elements are confined in a cylinder of a ferromagnetic material. A coil is wound around the cylinder to apply a magnetic field. By magneto-strictive effect, when the coil is energised the cylinder contracts longitudinally forcing the nut elements together. It is envisaged in this document that the coil be energised in accordance with machine cutting force.

The present invention seeks to provide an improved nut and screw mechanism. According to the present invention there is provided a ball nut for threaded engagement with a ball screw comprising, a first ball nut element, a second ball nut element axially adjacent to said first ball nut element means securing said ball nut elements to each other to prevent rotation relative to one another and biasing means, including a magnetic coil connected to urge said two nut elements, in opposite directions for preloading the nut in accordance with the operating conditions; characterized in that the biasing means further includes a pair of coaxial piezomagnetic sleeves of different diameter forming an annular space between them and said magnetic coil is disposed in said annular space.

The invention also includes a machine tool incorporating the ball nut in¯combination with a ball screw, and means for varying the excitation of the magnetic coil in accordance with the relative velocity of the ball nut and ball screw in a sense to reduce the ball nut preloading as the velocity increases and to increase the ball nut preloading as the velocity decreases.

In the drawings:

Figure 1 is a longitudinal cross section of a ball nut in accordance with the teaching of the present invention;

Fig. 2 is a cross sectional view of the ball nut of Fig. 1 taken along lines 2—2 thereof.

## Detailed Description of the Preferred Embodiment

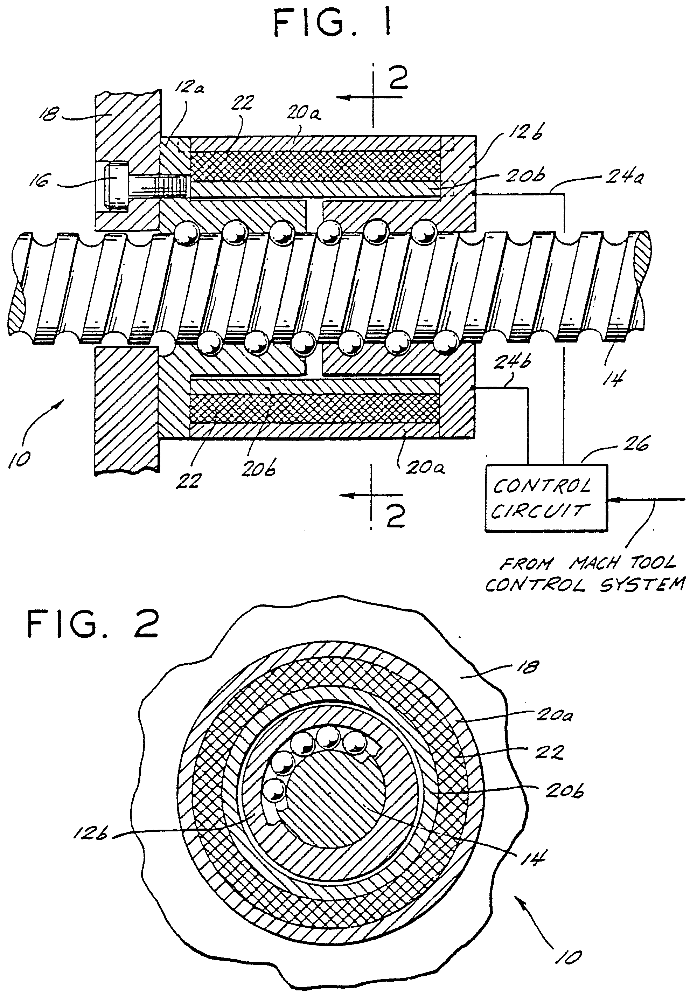

An improved ball nut 10, constructed in accordance with the teachings of the present invention, is illustrated in Figs. 1 and 2, Fig. 1 being a longitudinal cross section of the ball nut and Fig. 2 being a cross sectional view taken along lines 2—2 of Fig. 1. Ball nut 10 comprises a pair of nut halves 12a and 12b, each nut half being in threaded engagement with a ball screw 14 which is typically journaled for rotation in a fixed member, such as the bed of a machine tool (not shown). One of the ball nut halves, such as ball nut half 12a, for example, is secured by bolts 16 (only one of which is shown in Fig. 1) to a backet 18. In practice, bracket 18 is attached to a movable member (not shown), such as a machine tool axis slide.

Nut halves 12a and 12b are separated by a pair of concentric sleeves 20a and 20b, each sleeve being keyed at its opposite ends to a separate one of the nut halves so as to prevent the nut halves from rotating independently of each other. Sleeves 20a and 20b are each fabricated from a piezomagnetic material, such as nickel or a nickel-steel alloy. The linkage of each nut half to the other by sleeves 20a and 20b causes both nut halves and hence, the machine tool axis slide, to be displaced along the ball screw as the ball screw is rotatably driven, typically by a servo motor (not shown) under command of the machine tool numerical control system (not shown).

Disposed between sleeves 20a and 20b is an electromagnetic coil 22 whose windings lie perpendicular to the longitudinal axis of the ball screw. When a direct current voltage, is applied to coil leads 24a and 24b, from a control circuit 26, typically a voltage amplifier, in accordance with a control voltage supplied from the machine tool control system, the coil generates a magnetic field whose flux lines pass axially through each of the sleeves. Because each of the sleeves is fabricated from a piezomagnetic material, the sleeves, when subjected to the magnetic field produced by coil 22, tend to expand axially, urging ball nut halves 12a and 12b apart. The axial expansion of each sleeve varies directly with the strength of the magnetic field, which varies in accordance with the current through the coil. Each sleeve, when it expands axially in the presence of magnetic flux lines passing axially therethrough, exerts a force on the ball nut halves to urge them apart, the magnitude of the force varying in direct proportion to the axial expansion of the sleeve, which, as indicated, varies directly with the strength of the magnetic field. Thus, by varying the strength of the magnetic field through control of the excitation applied to the coil, the force against the ball nut halves, and hence, the ball nut preloading can be varied accordingly.

With the above-described improved ball nut is that ball nut preloading can thus be varied in accordance with ball screw speeds so that at very high ball screw velocities, ball nut preloading can be reduced to obtain very high machine tool axis slide velocities. Conversely, at low ball screw speeds, the ball nut preloading can be increased by increasing the magnetic coil excitation to increase ball nut loading to obtain very rigid coupling between the ball nut and the screw.

Ball nut 10 achieves greater overall stiffness by virtue of the ball nut halves being separated by, but keyed to, sleeves 20a and 20b. The greater overall stiffness of ball nut 10 lessens the likelihood of chatter as the ball screw threadedly engages the ball nut during axial movement of the machine tool axis slide.

The foregoing describes an improved ball nut having adjustable preloading so that at low ball screw speeds, ball nut preloading may be made high while at high ball screw speeds, the ball nut preloading can be reduced.

## Claims

1. A ball nut (10) for threaded engagement with a ball screw comprising, a first ball nut element (12b), a second ball nut element (12a) axially adjacent to said first ball nut element (12b), means (20a, 20b) securing said ball nut elements to each other to prevent rotation relative to one another and biasing means (20a, 20b, 22) including a magnetic coil (22) connected to urge said two nut elements (12b, 12a) in opposite directions for preloading the nut in accordance with the operating conditions; characterized in that the biasing means (20a, 20b, 22) further includes a pair of coaxial piezomagnetic sleeves (20a, 20b) of different diameter forming an annular space between them and said magnetic coil (22) is disposed in said annular space.

2. A machine tool including a ball nut according to claim 1, a ball screw (14), and means for varying the excitation of the magnetic coil (22) in accordance with the relative velocity of the ball nut (10) and ball screw (14) in a sense to reduce the ball nut preloading as the velocity increases and to increase the ball nut preloading as the velocity decreases.

## Patentansprüche

1. Kugelmutter (10) zum Verschrauben mit einer Kugelschraube, wobei die Kugelmutter ein erstes Kugelmutterelement (12b), ein dem ersten Kugelmutterelement (12b), axial benachbartes, zweites Kugelmutterelement (12a) und Mittel (20a, 20b) besitzt, die die beiden Kugelmutterelemente drehfest aneinander befestigen, sowie Vorbelastungsmittel (20a, 20b, 22), die eine Magnetspule (22) umfassen, die so geschaltet ist, daß sie die beiden Mutterelemente (12b, 12a) in einander entgegengesetzten Richtungen beaufschlagt, um die Mutter in Abhängigkeit von den Betriebsbedingungen vorzubelasten, dadurch gekennzeichnet, daß die Vorbelastungsmittel (20a, 20b, 22) ferner ein Paar von koaxialen, piezomagnetischen Hülsen (20a, 20b) mit unterschiedlichem Durchmesser besitzen, die zwischen sich einen ringförmigen Zwischenraum begrenzen, in dem die Magnetspule (22) angeordnet ist.

2. Werkzeugmaschine mit einer Kugelmutter nach Anspruch 1, einer Kugelschraube (14) und Mitteln zum Verändern der Erregung der Magnetspule in Abhängigkeit von der Relativgeschwindigkeit der Kugelmutter (10) und der Kugelschraube (14) in einem solchen Sinn, daß die Vorbelastung der Kugelmutter bei zunehmender Geschwindigkeit vermindert und bei abnehmender Geschwindigkeit erhöht wird.

## Revendications

1. Ecrou à billes (10) destiné à se visser sur une vis à billes, comprenant un premier élément d'écrou à billes (12*b*), un deuxième élément d'écrou à billes (12*a*) adjacent au premier élément (12*b*) de l'écrou à billes dans la direction axiale, des moyens (20*a*, 20*b*) qui fixent lesdits éléments de l'écrou à billes l'un à l'autre pour empêcher leur rotation relative l'un par rapport à l'autre, et des moyens de sollicitation (20*a*, 20*b*, 22) comprenant une bobine magnétique (22) connectée pour tendre à déplacer les deux éléments (12*b*, 12*a*) de l'écrou dans des sens opposés afin de précontraindre l'écrou en fonction des conditions de fonctionnement, caractérisé en ce que les moyens de sollicitation (20*a*, 20*b*, 22) comprennent en outre une paire de manchons piézomagnétiques coaxiaux (20*a*, 20*b*) de diamètres différents qui forment entre eux un espace annulaire, et ladite bobine magnétique (22) est disposée dans ledit espace annulaire.

2. Machine-outil comprenant un écrou à billes selon la revendication 1, une vis à billes (14), et des moyens pour faire varier l'excitation de la bobine magnétique (22) en fonction de la vitesse relative de l'écrou à billes (10) par rapport à la vis à billes (14) dans le sens qui réduit la précontrainte de l'écrou à billes lorsque la vitesse croît et qui augmente la précontrainte de l'écrou à billes lorsque la vitesse décroît.

0 096 072

# FIG. 1

CONTROL CIRCUIT

FROM MACH TOOL CONTROL SYSTEM

# FIG. 2